# EUROPÄISCHE PATENTSCHRIFT

(11) **EP 1 985 510 B1**
(45) Veröffentlichungstag und Bekanntmachung des Hinweises auf die Patenterteilung: **14.08.2013**
(21) Anmeldenummer: 08002246.0
(22) Anmeldetag: 07.02.2008
(51) Int. Cl.: B60R 22/34, B60R 13/08

(54) **Kappe für eine Sicherheitsgurt-Aufrollvorrichtung**
Cap for a safety belt unrolling device
Chaperon pour un dispositif d'enroulement de ceinture de sécurité

(30) Priorität: 28.04.2007 DE 102007020192
(43) Veröffentlichungstag der Anmeldung: 29.10.2008
(73) Patentinhaber: Dr. Ing. h.c. F. Porsche AG, 70435 Stuttgart (DE)
(72) Erfinder: Boegge, Herbert, 75446 Wiernsheim (DE); Mäsing, Alfons, 75417 Muehlacker-Enzberg (DE); Zeissner, Alexander, 71287 Weissach-Flacht (DE)

(56) Entgegenhaltungen:
- WO-A1-2008/142981
- GB-A- 2 242 347
- US-A- 5 881 962

## Beschreibung

Die Erfindung bezieht sich auf eine Kappe für eine Sicherheitsgurt-Aufrollvorrichtung nach dem Oberbegriff des Anspruchs 1. Die Erfindung betrifft außerdem eine mit einer solchen Kappe ausgestattete Sicherheitsgurt-Aufrollvorrichtung.

Ein wichtiger Faktor bei der Leistung einer Sicherheitsgurt-Aufrollvorrichtung ist das durch die Aufrollvorrichtung erzeugte Geräusch. Der Sperrmechanismus einer Sicherheitsgurt-Aufrollvorrichtung enthält eine Anzahl beweglicher Teile, von denen im Fahrbetrieb das Geräusch entsteht. Insbesondere wenn der Sperrmechanismus einen Sensor mit einem beweglich gelagerten Element für die fahrzeugsensitive Auslösung des Sperrmechanismus enthält, wird der Sensor durch Erschütterungen im Fahrbetrieb ständig ausgelenkt und schlägt dabei an andere Teile an.

Die Bedeutung einer leisen Sicherheitsgurt-Aufrollvorrichtung steigt, falls die Aufrollvorrichtung in einen Sitz eingebaut und nahe dem oberen Teil des Sitzes angeordnet ist, was die Aufrollvorrichtung in große Nähe zum 0hr eines Fahrzeuginsassen bringt.

Zur Vermeidung derartiger Schwirr- und Klappergeräusche werden zwar von den Herstellern der Aufrollvorrichtungen Bauteile zur Ruhigstellung der Sensormasse in Form von Drahtbügeln oder dergleichen angeboten, jedoch wirken diese Lösungen zumeist nur bei abgelegtem Sicherheitsgurt.

Aus der DE 42 31 050 A1 ist eine Aufrollvorrichtung bekannt, die innerhalb eines Hohlraums einer Säule eines Kraftfahrzeugs angeordnet ist. Die Aufrollvorrichtung umfasst einen Gurtaufrollautomaten sowie einen Gurtstraffer. Der Gurtaufrollautomaten ist von einem Gehäuse umschlossen, das eine hohlraumseitig gegen das Innenblech der Säule anliegende Bodenplatte einschließt, die mittels einer einzigen Schraube am Innenblech befestigt ist. Um die Übertragung von Körperschall vom Gurtaufrollautomaten auf die Säule zu verhindern, ist bei der bekannten Aufrollvorrichtung zwischen der Schraube einerseits und dem Innenblech bzw. der Bodenplatte andererseits ein hülsenförmiges Elastomerteil vorgesehen.

Aus der DE 91 10 869.1 U1 ist eine Sicherheitsgurt-Aufrollvorrichtung bekannt, die mit einem Gehäusedeckel versehen ist, der als Kunststoff-Spritzteil mit einer Bodenwand ausgebildet ist. Es sind eine Vielzahl von an der Bodenwand angegossenen Erhebungen vorgesehen, die sich in der Ausformrichtung des Gehäusedeckels verjüngen und eine schallabsorbierende Labyrinth-Struktur bilden. WO2008/142981A1 beschreibt eine Kappe gemäß dem Oberbegriff des Anspruchs 1.

Der Erfindung liegt die Aufgabe zugrunde, für eine Sicherheitsgurt-Aufrollvorrichtung eine einfach zu verwirklichende Geräuschdämpfung vorzuschlagen.

Erfindungsgemäß wird dieses Problem durch die Gegenstände der unabhängigen Ansprüche gelöst. Vorteilhafte Weiterbildungen ergeben sich aus den abhängigen Ansprüchen.

Die erfindungsgemäße Kappe besteht aus Aluminium und ist mit einer Klebeplatte versehen, über die die Kappe mit auf ein Gehäuse der Sicherheitsgurt-Aufrollvorrichtung aufgeklebt ist. Die von dem Sensor der Sicherheitsgurt-Aufrollvorrichtung entstehenden Geräusche werden durch Kappe mit der Klebeplatte gedämpft.

In einer vorteilhaften Ausführungsform besteht die Klebeplatte aus einem Elastomer und insbesondere aus einem Butyl-Klebstoff. Der Butyl-Klebstoff weist gute Dämpfungseigenschaften und eine gute Beständigkeit gegen Säure und Alkalien auf.

Weitere Vorteile und Ausgestaltungen der Erfindung ergeben sich aus der nachfolgenden Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand mehrerer Ausführungsbeispiele in den Zeichnungen schematisch dargestellt und wird im Folgenden unter Bezugnahme auf die Zeichnungen ausführlich beschrieben.
- Fig. 1: zeigt in schematischer Darstellung die Befestigung einer Sicherheitsgurt-Aufrollvorrichtung mit einer erfindungsgemäßen Kappe an einem Fahrzeugaufbau,
- Fig. 2: zeigt in perspektivischer Ansicht eine erfindungsgemäße Kappe,
- Fig. 3: zeigt in schematischer Darstellung die Aufsetzung einer erfindungsgemäßen Kappe auf der Sicherheitsgurt-Aufrollvorrichtung,
- Fig. 4: zeigt in schematischer Darstellung eine Sicherheitsgurt-Aufrollvorrichtung mit einer erfindungsgemäßen Kappe,
- Fig. 5: zeigt in schematischer Darstellung eine Draufsicht einer erfindungsgemäßen Kappe,

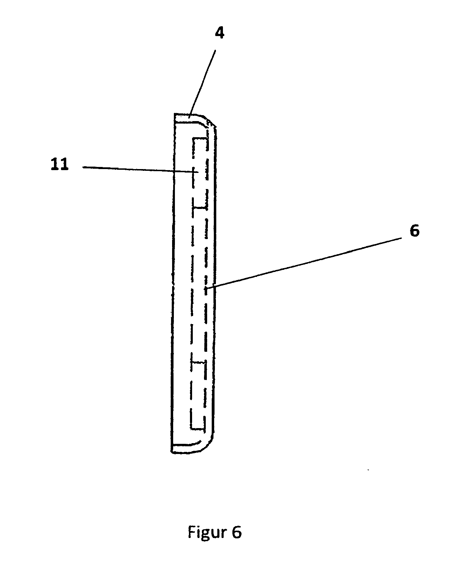

- Fig. 6: zeigt in schematischer Darstellung einen Querschnitt durch eine erfindungsgemäße Kappe.

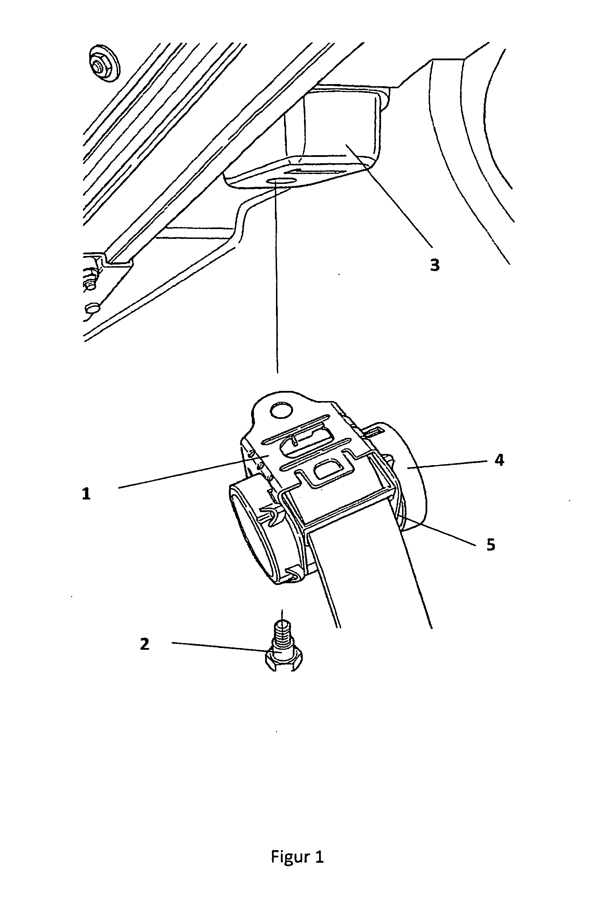

In Figur 1 ist die Befestigung einer Sicherheitsgurt-Aufrollvorrichtung 1 mittels einer Schraube 2 an einem Fahrzeugbau 3 dargestellt. Die Sicherheitsgurt-Aufrollvorrichtung wird innerhalb der B-Säule und zwar in Ohrenhöhe eines Sitzinsassen angeordnet. Die Sicherheitsgurt-Aufrollvorrichtung weist einen Sperrmechanismus auf, der einen Sensor (nicht gezeigt) mit einem beweglich gelagerten Element für die fahrzeugsensitive Auslösung des Sperrmechanismus enthält. Der Sensor wird durch Erschütterungen im Fahrbetrieb ständig ausgelenkt und schlägt dabei an andere Teile an, wodurch Geräusche entstehen. Zur Reduzierung dieser Geräusche wird zumindest eine erfindungsgemäße Kappe 4 auf eine sensorseitige Stirnseite 5 der Sicherheitsgurt-Aufrollvorrichtung aufgesetzt.

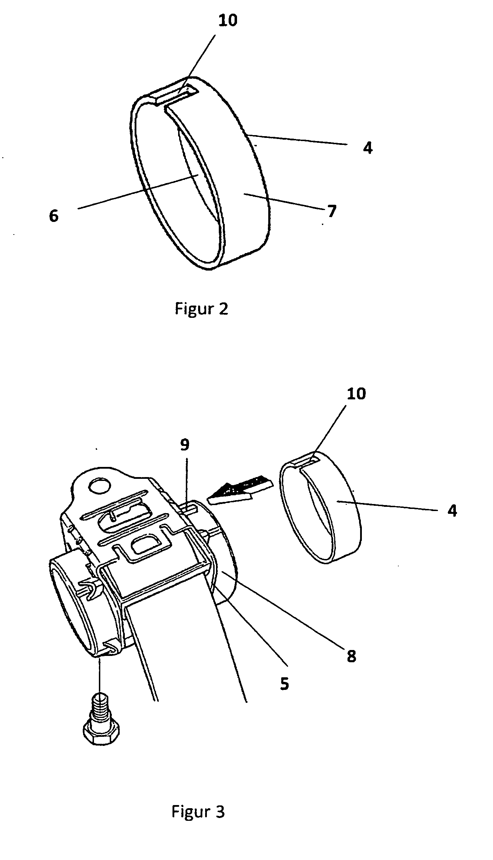

Figur 2 zeigt die erfindungsgemäße Kappe 4 im nicht montierten Zustand. Die Kappe 4 besteht aus einem im Wesentlichen kreisförmigen Bodenteil 6 mit einer rechtwinklig das Bodenteil 6 umgebenden Wand 7. Die Kappe 4 weist also im Wesentlichen eine flache Schalenform auf, was aus den Figuren ersichtlich ist. Als Material für die Kappe 4 wird ein Metall benutzt. Vorzugsweise besteht die Kappe 4 aus Aluminium.

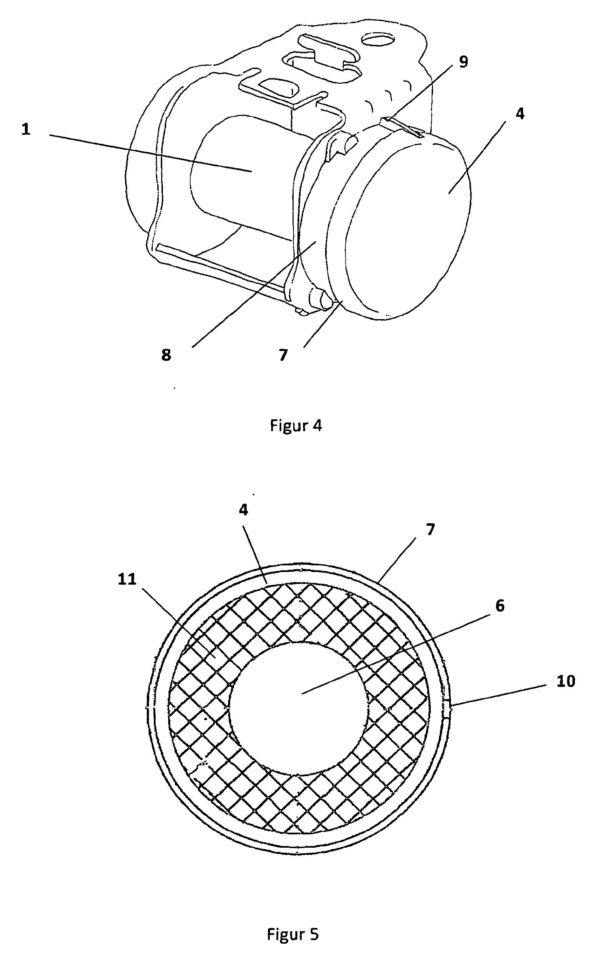

Figur 3 zeigt die Aufsetzung der Kappe 4 auf einem Gehäuse 8 der sensorseitigen Stirnseite 5 der Sicherheitsgurt-Aufrollvorrichtung. Das Gehäuse 8 besteht aus einem Kunststoffmaterial. Gleiche Elemente werden mit gleichen Bezugszeichen versehen. Die Stirnseite 5 des Kunststoffgehäuses 8 ist im Wesentlichen zylinderförmig und weist mindestens eine Erhebung 9 an einer Stelle auf seiner äußeren Fläche auf. Die Wand 7 der Kappe 4 besitzt eine entsprechende Ausklinkung oder Ausnehmung 10, die bei der Aufsetzung der Kappe 4 auf das Kunststoffgehäuse die Erhebungen 9 aufnimmt, so dass die Kappe 4 in die richtige Lage gebracht werden kann, was aus der Figur 4 ersichtlich ist. Selbstverständlich können mehrere Erhebungen 9 um den Umfang des Kunststoffgehäuses und mehrere entsprechende Ausklinkungen oder Ausnehmungen 10 in der Kappe 4 vorgesehen werden.

Figur 5 zeigt eine Draufsicht der Kappe 4, die mit einer Klebeplatte 11 versehen ist, über die die Kappe 4 mit dem Kunststoffgehäuse 8 selbstklebend verbunden ist. Die Klebeplatte 11 ist auf der Grundfläche 6 der Kappe 4 aufgeklebt und ist im Wesentlichen ringförmig ausgebildet.

Die Klebeplatte 11 besteht aus einem Elastomer und vorzugsweise aus einem Butyl-Klebstoff. Der Butyl-Klebstoff kann bei Raumtemperatur plastisch verformbar sein, was das Aufkleben der Klappe 4 auf dem Kunststoffgehäuse 8 unterstützt. Der Butyl-Klebstoff weist außerdem gute Dämpfungseigenschaften und eine gute Beständigkeit gegen Säure und Alkalien auf. Die Klebeplatte 11 wird aus einer Butyl-Schnur gebildet, die rund eingelegt verpresst ist. Vorteilhaft ist die Butyl-Schnur auf 2 mm bis 3mm und vorzugsweise auf 2.5 mm verpresst.

Die vorhergehende Beschreibung der Ausführungsbeispiele gemäß der vorliegenden Erfindung dient nur zu illustrativen Zwecken und nicht zum Zwecke der Beschränkung der Erfindung. Insbesondere im Hinblick auf einige bevorzugte Ausführungsbeispiele entnimmt ihr der Fachmann, dass verschiedene Änderungen und Modifikationen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

## Patentansprüche

1. Kappe für eine Sicherheitsgurt-Aufrollvorrichtung mit einem Gehäuse (8), die auf eine einem Sensor zugeordnete Seite des Gehäuses (8) der Sicherheitsgurt-Aufrollvorrichtung (1) aufsetzbar ist, wobei die Kappe (4) aus Aluminium besteht und mit einer Klebeplatte (11) versehen ist, über die die Kappe (4) mit dem Gehäuse (8) aufgeklebt ist, daduch gekennzeichnet, dass die Kappe (4) aus einem im Wesentlichen kreisförmigen Bodenteil (6) mit einer rechtwinklig das Bodenteil umgebenden Wand (7) besteht und die Klebeplatte (11) mit dem Bodenteil (6) der Kappe (4) verbunden ist.

2. Kappe nach Anspruch 1, **dadurch gekennzeichnet, dass** die Klebeplatte (11) aus einem Elastomer, insbesondere aus einem Butyl-Klebstoff, besteht.

3. Kappe nach einem der vorhergehenden Ansprüche, **dadurch gekennzeichnet, dass** die Klebeplatte (11) bei Raumtemperatur plastisch verformbar ist.

4. Kappe nach Anspruch 1, **dadurch gekennzeichnet, dass** die Klebeplatte (11) auf dem Bodenteil (6) der Kappe aufgeklebt ist.

5. Kappe nach Anspruch 4, **dadurch gekennzeichnet, dass** die Wand (7) mindestens eine Ausklinkung (10) zum Aufnehmen einer auf das Gehäuse (8) ausgebildeten Erhebung (9) aufweist.

6. Kappe nach einem der vorhergehenden Ansprüche, **dadurch gekennzeichnet, dass** die Klebeplatte (11) im Wesentlichen ringförmig ausgebildet ist.

7. Kappe nach Anspruch 6. **dadurch gekennzeichnet, dass** die Klebeplatte (11) eine Dicke zwischen 2 mm bis 3 mm aufweist.

8. Sicherheitsgurt-Aufrollvorrichtung mit einem Gehäuse (8), auf das an einer einem Sensor zugeordneten Seite eine Kappe (4) nach einem der Ansprüche 1 bis 7 aufgesetzt ist.

## Claims

1. Cap for a safety belt unrolling device, with a housing (8) which is placeable onto a side of the housing (8) of the safety belt unrolling device (1), which side is assigned to a sensor, wherein the cap (4) is composed of aluminium and is provided with an adhesive plate (11) via which the cap (4) is adhesively bonded to the housing (8), **characterized in that** the cap (4) consists of a substantially circular base part (6) with a wall (7) surrounding the base part at a right angle, and the adhesive plate (11) is connected to the base part (6) of the cap (4).

2. Cap according to Claim 1, **characterized in that** the adhesive plate (11) is composed of an elastomer, in particular of a butyl adhesive.

3. Cap according to either of the preceding claims, **characterized in that** the adhesive plate (11) is plastically deformable at room temperature.

4. Cap according to Claim 1, **characterized in that** the adhesive plate (11) is adhesively bonded onto the base part (6) of the cap.

5. Cap according to Claim 4, **characterized in that** the wall (7) has at least one notch (10) for receiving an elevation (9) formed on the housing (8).

6. Cap according to one of the preceding claims, **characterized in that** the adhesive plate (11) is of substantially annular design.

7. Cap according to Claim 6, **characterized in that** the adhesive plate (11) has a thickness of between 2 mm and 3 mm.

8. Safety belt unrolling device, with a housing (8) onto which, on a side assigned to a sensor, a cap (4) according to one of Claims 1 to 7 is placed.

## Revendications

1. Chaperon pour un dispositif enrouleur de ceinture de sécurité comprenant un boîtier (8) qui peut être placé sur un côté du boîtier (8) du dispositif enrouleur de ceinture de sécurité (1) associé à un capteur, le chaperon (4) se composant d'aluminium et étant pourvu d'une plaque adhésive (11) par le biais de laquelle le chaperon (4) est collé au boîtier (8), **caractérisé en ce que** le chaperon (4) se compose d'une partie de fond (6) de forme essentiellement circulaire avec une paroi (7) entourant la partie de fond à angle droit et la plaque adhésive (11) est connectée à la partie de fond (6) du chaperon (4).

2. Chaperon selon la revendication 1, **caractérisé en ce que** la plaque adhésive (11) se compose d'un élastomère, en particulier d'un adhésif butyle.

3. Chaperon selon l'une quelconque des revendications précédentes, **caractérisé en ce que** la plaque adhésive (11) peut être déformée plastiquement à température ambiante.

4. Chaperon selon la revendication 1, **caractérisé en ce que** la plaque adhésive (11) est collée sur la partie de fond (6) du chaperon.

5. Chaperon selon la revendication 4, **caractérisé en ce que** la paroi (7) présente au moins une encoche (10) pour recevoir une saillie (9) réalisée sur le boîtier (8).

6. Chaperon selon l'une quelconque des revendications précédentes, **caractérisé en ce que** la plaque adhésive (11) est réalisée essentiellement sous forme annulaire.

7. Chaperon selon la revendication 6, **caractérisé en ce que** la plaque adhésive (11) présente une épaisseur comprise entre 2 mm et 3 mm.

8. Dispositif enrouleur de ceinture de sécurité comprenant un boîtier (8) sur lequel est placé un chaperon (4) selon l'une quelconque des revendications 1 à 7 au niveau d'un côté tourné vers un capteur.
